(19) Europäisches Patentamt
European Patent Office
Office européen des brevets

(11) EP 1 637 542 A1

(12) # EUROPEAN PATENT APPLICATION
published in accordance with Art. 158(3) EPC

(43) Date of publication:
**22.03.2006 Bulletin 2006/12**

(21) Application number: **04729279.2**

(22) Date of filing: **23.04.2004**

(51) Int Cl.:
***C08B 15/00*** *(1968.09)* ***C08B 33/00*** *(1974.07)*

(86) International application number:
**PCT/JP2004/005923**

(87) International publication number:
**WO 2004/099766 (18.11.2004 Gazette 2004/47)**

(84) Designated Contracting States:
**CH DE FR GB IE IT LI**

(30) Priority: **24.04.2003 JP 2003119827**

(71) Applicant: **DAICEL CHEMICAL INDUSTRIES, LTD.**
**Sakai-shi, Osaka 590-0905 (JP)**

(72) Inventors:
- **ONISHI, Atsushi**
  **Tsukuba-shi, Ibaraki 3050047 (JP)**
- **KUDO, Keiko**
  **Tsukuba-shi, Ibaraki 3050047 (JP)**

(74) Representative: **Grünecker, Kinkeldey,**
**Stockmair & Schwanhäusser**
**Anwaltssozietät**
**Maximilianstrasse 58**
**80538 München (DE)**

(54) **SEPARATORY AGENT FOR OPTICAL ISOMER**

(57) A separating agent for optical isomers which contains a polysaccharide derivative as an active ingredient, wherein the polysaccharide derivative serving as an active ingredient is one formed by replacing at least part of the hydrogen atoms of the hydroxyl groups and amino groups of a polysaccharide with at least one member selected out of a benzoyl group having a specific alkyl group and a carbamoyl group in which one hydrogen atom has been replaced with an aromatic group having a specific alkyl group. It is a novel separating agent for optical isomers which has the high ability to asymmetrically identify the target compound to be analyzed and isolated.

EP 1 637 542 A1

## Description

### TECHNICAL FIELD

The present invention relates to a separating agent for optical isomers to be used for a method of separating compounds, especially for the separation of optical isomers by means of chromatography. In particular, the present invention relates to a separating agent for optical isomers for optically resolving a wide variety of chiral compounds with a high separation factor in the analysis of drugs, foods, agricultural chemicals, and perfumes.

### BACKGROUND ART

Optical isomers having a mirror image - actual image relationship have quite same physical and chemical properties such as a boiling point, a melting point, and solubility. However, there are a large number of cases where there is a difference in interaction on a living body like physiological activity such as a taste or odor between optical isomers.

In particular, in the field of drugs, there is a high possibility that remarkable differences in drug effect and toxicity between optical isomers are observed. Therefore, in the Medicine Production Guideline, the Ministry of Health, Labour and Welfare describes that "when such drug is a racemic body, it is desirable to study the absorption, distribution, metabolism, and excretion dynamics of each of its isomers".

As described above, optical isomers are identical to each other in physical and chemical properties such as a boiling point, a melting point, and solubility. Therefore, the optical isomers cannot be separated by means of classical and ordinary separation means such as distillation or crystallization.

To cope with the problem, research has been vigorously conducted on a technique for analyzing a wide variety of optical isomers with ease and high accuracy. In addition, an optical resolution method based on high performance liquid chromatography (HPLC), especially an optical resolution method based on a column for separating optical isomers for HPLC has progressed as such analysis technique.

A separating agent for optical isomers itself or a chiral stationary phase obtained by causing an appropriate carrier to carry a separating agent for optical isomers has been used as the column for separating optical isomers described herein.

Known examples of such separating agent for optical isomers include optically active poly(triphenyl methyl methacrylate) (see, for example, JP-A-57-150432), a cellulose or amylose derivative (see, for example, Y. Okamoto, M. Kawashima and K. Hatada, J. Am. Chem. Soc., 106, 5337, 1984), and ovomucoid which is a protein (see, for example, JP-A-63-307829).

In addition, out of a large number of columns for separating optical isomers using those separating agents for optical isomers, a column for separating optical isomers obtained by causing silica gel to carry a cellulose or amylose derivative is known to have high ability to asymmetrically identify an extremely wide range of compounds. In recent years, investigation has been made into the liquid chromatography isolation of an optically active substance on an industrial scale using a chiral stationary phase for HPLC and a simulated moving bed method in combination (see, for example, Phram Tech Japan 12, 43) .

From such viewpoint, it has been demanded to find a chiral stationary phase capable of separating optical isomers that cannot have been separated heretofore and a chiral stationary phase capable of not only completely separating optical isomers but also classifying the optical isomers into a target compound to be isolated and the others in order to improve the productivity of the chromatography isolation of optical isomers, that is, a chiral stationary phase having an increased separation factor $\alpha$. In addition, research has been vigorously conducted to find a polysaccharide derivative having a large separation factor $\alpha$ and high asymmetric identification ability.

An object of the present invention is to provide a novel separating agent for optical isomers having high ability to asymmetrically identify a target compound to be analyzed and isolated.

### DISCLOSURE OF THE INVENTION

The inventors of the present invention have made extensive studies about a separating agent for optical isomers having characteristic asymmetric identification ability, to thereby achieve the present invention.

That is, the present invention provides a separating agent for optical isomers comprising, as an active ingredient, a polysaccharide derivative prepared by substituting at least part of hydrogen atoms of hydroxyl and amino groups of a polysaccharide with at least one kind of atomic group represented by each of the following general formulae (1) and (2). In the following formulae, Ar represents an aromatic hydrocarbon group, and R represents an alkyl group having 4 carbon atoms except a tert-butyl group.

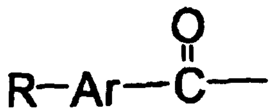

(1)

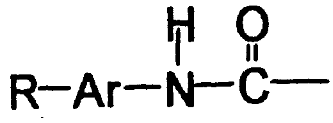

(2)

BRIEF DESCRIPTION OF THE DRAWINGS

Fig. 1 shows a chromatograph obtained when a packed column produced in Example 1 is used to separate optical isomers of Compound 1 represented by a structural formula (3) by means of liquid chromatography.
Fig. 2 shows a chromatograph obtained when the packed column produced in Example 1 is used to separate optical isomers of Compound 2 represented by a structural formula (4) by means of liquid chromatography.
Fig. 3 shows a chromatograph obtained when a packed column produced in Example 2 is used to separate optical isomers of Compound 1 represented by the structural formula (3) by means of liquid chromatography.
Fig. 4 shows a chromatograph obtained when the packed column produced in Example 2 is used to separate optical isomers of Compound 2 represented by the structural formula (4) by means of liquid chromatography.
Fig. 5 shows a chromatograph obtained when a packed column produced in Example 3 is used to separate optical isomers of Compound 1 represented by the structural formula (3) by means of liquid chromatography.
Fig. 6 shows a chromatograph obtained when the packed column produced in Example 3 is used to separate optical isomers of Compound 2 represented by the structural formula (4) by means of liquid chromatography.
Fig. 7 shows a chromatograph obtained when a packed column produced in Comparative Example 1 is used to separate optical isomers of Compound 1 represented by the structural formula (3) by means of liquid chromatography.
Fig. 8 shows a chromatograph obtained when the packed column produced in Comparative Example 1 is used to separate optical isomers of Compound 2 represented by the structural formula (4) by means of liquid chromatography.
Fig. 9 shows a chromatograph obtained when a packed column produced in Comparative Example 2 is used to separate optical isomers of Compound 1 represented by the structural formula (3) by means of liquid chromatography.
Fig. 10 shows a chromatograph obtained when the packed column produced in Comparative Example 2 is used to separate optical isomers of Compound 2 represented by the structural formula (4) by means of liquid chromatography.

BEST MODE FOR CARRYING OUT THE INVENTION

Hereinafter, embodiments of the present invention will be described in detail.

The separating agent for optical isomers of the present invention contains, as an active ingredient, at least one of a polysaccharide ester derivative and a polysaccharide carbamate derivative each having an aromatic hydrocarbon group having an alkyl group having 4 carbon atoms except a tert-butyl group.

The separating agent for optical isomers of the present invention can be synthesized in accordance with an ordinary method through condensation between: an aromatic carboxylic acid having the alkyl group or a derivative thereof, or an aromatic isocyanate derivative having the alkyl group; and a hydroxyl group of a polysaccharide. Examples of the aromatic carboxylic acid derivative include chlorides of aromatic carboxylic acids, acid anhydrides of aromatic carboxylic acids, and aromatic carboxylates. The aromatic carboxylic acid and a derivative thereof, and the aromatic isocyanate may be those commercially available, or may be synthesized in accordance with an ordinary method.

The polysaccharide may be any one of a synthetic polysaccharide, a natural polysaccharide, and a natural product-denatured polysaccharide so long as it shows optical activity. The polysaccharide desirably has high regularity of a bonding fashion.

Examples of such polysaccharide include: β-1,4-glucan (cellulose); α-1,4-glucan (amylose or amylopectin); α-1,6-glucan (dextran); β-1,6-glucan (bustullan) ; β-1,3-glucan (curdlan, schizophyllan, or the like); α-1,3-glucan; β-1,2-glucan (Crown Gall polysaccharide); β-1,4-galactan; β-1,4-mannan; α-1, 6-mannan; β-1,2-fructan (inulin); β-2,6-fructan (levan); β-1,4-xylan; β-1,3-xylan; β-1,4-chitosan; α-1,4-N-acetylchitosan (chitin); pullulan; agarose; alginic acid; and

starch containing amylose.

Of those, cellulose, amylose, β-1,4-xylan, β-1,4-chitosan, chitin, β-1, 4-mannan, inulin, curdlan, or the like is preferably used for the polysaccharide because a polysaccharide with high purity is readily available, and cellulose or amylose is particularly preferable.

The number average degree of polymerization of each of those polysaccharides (the average number of pyranoses and furanoses (which may hereinafter be referred to as "monosaccharide units") in one molecule) is 5 or more, or preferably 10 or more. There is no particular upper limit for the number average degree of polymerization, but the number average degree of polymerization is preferably 1, 000 or less in terms of ease of handling.

The separating agent for optical isomers of the present invention preferably contains at least one of an atomic group represented by the general formula (1) and an atomic group represented by the general formula (2) in an amount of 0.1 per one monosaccharide unit for the purpose of increasing the separation factor upon separation of optical isomers. The number of the atomic groups per one monosaccharide unit can be adjusted depending on the equivalent amount of the aromatic carboxylic acid or a derivative thereof, or of the aromatic isocyanate with respect to a hydroxyl group of the polysaccharide at the time of the condensation.

The form of bonding of the atomic group to the polysaccharide in the separating agent for optical isomers of the present invention is not particularly limited. For example, the separating agent for optical isomers of the present invention may be a polysaccharide derivative prepared by binding atomic groups identical to each other to a polysaccharide, or may be a polysaccharide derivative prepared by binding different kinds of atomic groups to a polysaccharide.

In addition, the distribution of the atomic group with respect to the polysaccharide in the separating agent for optical isomers of the present invention may be even or biased. All monosaccharide units may have the same number of the atomic groups bound to each monosaccharide unit, or may be different from each other in number of the atomic groups bound to each monosaccharide unit.

The position of the atomic group bound to a monosaccharide unit may be the position of a specific hydroxyl group in the monosaccharide unit, or may have no particular regularity.

The aromatic hydrocarbon groups in the atomic groups represented by the general formulae (1) and (2) are selected in accordance with the structure of a target substance to be analyzed and isolated. Examples of such aromatic hydrocarbon groups include a phenylene group, a naphthylene group, and a pyrenylene group.

In the present invention, the alkyl group in each of the atomic groups is an alkyl group having 4 carbon atoms except a tert-butyl group, and is selected in accordance with the structure of a target substance to be analyzed and isolated. The alkyl group may be a linear alkyl group having no side chain, or may be a branched alkyl group having a side chain. Examples of such alkyl group include an n-butyl group, an iso-butyl group, and a sec-butyl group.

The bonding position of the alkyl group in the aromatic hydrocarbon group is selected in accordance with the structure of a target substance to be analyzed and separated. An example of such bonding position includes a position 4 when the aromatic hydrocarbon group is a phenylene group. The reason for this is probably as follows. As the phenylene group has a moderately bulky subtituent at its position 4, when the optical isomer as a solute approaches the polysaccharide derivative, the orientation of the solute is aligned without hindering the solute from approaching the polysaccharide derivative, and the high-order structure of the polysaccharide derivative itself is formed into an advantageous form for asymmetrically identifying.

The aromatic hydrocarbon group may have any substituent except the alkyl group to the extent that the effects of the present invention are not impaired. Examples of such substituent include a halogen group, a substituent having a hetero atom, and a saturated, unsaturated, or cyclic hydrocarbon group which may have a halogen atom or a hetero atom.

The separating agent for optical isomers of the present invention is used for chromatography such as gas chromatography, liquid chromatography, thin-layer chromatography, capillary electrophoresis, or continuous liquid chromatography capable of continuously isolating optical isomers of, for example, a simulated moving bed system described in WO 95/23125.

The separating agent for optical isomers of the present invention is particularly preferably used for liquid chromatography, thin-layer chromatography, capillary electrophoresis, or the continuous liquid chromatography. The separating agent for optical isomers of the present invention is applicable to a host/guest separating agent utilizing the self-assembly of a long-chain alkyl group, film separation, and a liquid crystal material as well as the chromatography. The separating agent for optical isomers of the present invention is used in a form appropriate for an ordinary method of separating optical isomers. Examples of a form appropriate for chromatography or capillary electrophoresis include particles of a separating agent for optical isomers and a form in which a separating agent is carried on a particulate or gel carrier.

The particles of a separating agent for optical isomers can be produced by pulverizing the separating agent for optical isomers itself. The particles of a separating agent for optical isomers are preferably particles obtained by spheroidizing the pulverized product for the purpose of increasing the separation factor upon separation of an optical isomer from a racemic body, and are more preferably particles having uniformized grain size. The pulverization and

spheroidization of a separating agent for optical isomers can be performed by means of a conventionally known method. In addition, the grain size can be adjusted by means of a method such as classification or the mixing of a classified product.

The carrier is not particularly limited so long as it can fix the separating agent for optical isomers of the present invention in a stationary phase. As such a carrier, each of various carriers known to be used for a separation method such as the above-described chromatography, and examples of an available carrier include a porous organic carrier and a porous inorganic carrier and so on. Of those, a porous inorganic carrier is preferably used.

Examples of the porous organic carrier include polymer substances such as polystyrene, polyacrylamide, polyacrylate, and derivatives of them. Examples of the porous inorganic carrier include silica, alumina, magnesia, glass, kaolin, titanium oxide, a silicate, and hydroxyapatite.

The form in which the carrier carries the separating agent for optical isomers of the present invention is not particularly limited. Examples of such form include: physical adsorption between the separating agent for optical isomers and the carrier; and chemical bonding between the separating agent for optical isomers and the carrier. Examples of the chemical bonding include: chemical bonding between a third component interposed between the separating agent for optical isomers and the carrier and the separating agent for optical isomers; and bonding between the separating agent for optical isomers and the carrier as a result of the irradiation of the separating agent for optical isomers with light and a radical reaction due to the irradiation. The carrier can be allowed to carry the separating agent for optical isomers in this way by means of a conventionally known method.

A particularly preferable carrier in the present invention is silica gel. The silica gel has a particle size of preferably 0.1 μm to 10 mm, more preferably 1μm to 300 μm, or still more preferably 1 to 75 μm. The average pore size of pores formed on the surface of the porous carrier is preferably 10 Å to 100 μm, or more preferably 50 Å to 50, 000 Å.

Although the surface of the silica gel is desirably treated with a treatment agent such as an appropriate silane compound for eliminating an influence of remaining silanol, no problem occurs even if the surface is not treated at all. The surface treatment can be performed by means of a conventionally known method.

The amount of the separating agent for optical isomers carried on the carrier, which varies depending on, for example, a method of separating optical isomers and the kind of the carrier, is preferably 1 to 80 mass%, or more preferably 5 to 60 mass% with respect to a packing material.

The separating agent for optical isomers of the present invention can be used for separating a wide variety of optical isomers. Therefore, the separating agent for optical isomers of the present invention can be used for: separating optical isomers that have been hardly or insufficiently separated by means of a conventional separating agent for optical isomers; and separating optical isomers, which have been hardly separated by means of a general-purpose device, by means of the general-purpose device.

Examples of such optical isomers include a compound having a bulky substituent near an asymmetric center and a compound in which an aromatic group, a hydroxyl group, and an amino group are arranged at appropriate positions.

## EXAMPLES

Hereinafter, the present invention will be described in more detail by way of examples. However, the present invention is not limited to the examples.

<Example 1> Method of producing cellulose

tris(4-n-butylphenylcarbamate)-carrying packing material and method of producing packed column

(1) Surface treatment of silica gel

Porous silica gel (having a particle size of 20 μm) was allowed to react with 3-aminopropyltriethoxysilane by means of a conventionally known method to subj ect the porous silica gel to an aminopropylsilane treatment (APS treatment).

(2) Synthesis of cellulose tris(4-n-butylphenylcarbamate)

Under a nitrogen atmosphere, 3.91 g of cellulose and 24.15 g (2.06 of equivalent weight with respect to all the hydroxyl groups of cellulose) of 4-n-butylphenylisocyanate were stirred under heat at the reflux temperature of pyridine for 24 hours in 130 mL of dry pyridine. After that, 5.0 mL of 2-propanol were added to transform excessive isocyanate into a carbamate. Then, the resultant reaction liquid was poured into 4.0 L of acetonitrile. The precipitated solid was filtered out by means of a glass filter, and the filtered solid was washed with acetonitrile several times and dried in a vacuum (60°C, 5 hours). As a result, 15.02 g of a slightly yellowish white solid were produced (yield: 90.6%). The analyses of the carbon, hydrogen, and nitrogen elements of the resultant white solid are shown below.

CHN results:

| | | | |
|---|---|---|---|
| Measured value | C%: 67.47 | H%: 7.04 | N%: 5.97 |
| Theoretical value | C%: 68.10 | H%: 7.18 | N%: 6.11 |

(3) Production of cellulose

tris(4-n-butylphenylcarbamate)-carrying packing material

10 g of cellulose tris(4-n-butylphenylcarbamate) produced in the above item (2) were dissolved into 80 mL of acetone, and the acetone solution was evenly applied to 40.0 g of silica gel in the above item (1). After the application, acetone was distilled off under reduced pressure to produce a target cellulose tris(4-n-butylphenylcarbamate)-carrying packing material.

(4) Production of packed column by means of cellulose

tris(4-n-butylphenylcarbamate)-carrying packing material

A stainless column having an inner diameter of 0.46 cm and a length of 25 cm was packed with the carrying packing material produced in the above item (3) under pressure by a slurry packing method to produce a packed column filled with the cellulose tris(4-n-butylphenylcarbamate)-carrying packing material.

<Example 2> Method of producing cellulose

tris(4-iso-butylphenylcarbamate)-carrying packing material and method of producing packed column

(1) Surface treatment of silica gel

A silica gel surface treatment was performed in the same manner as in the above item (1) of Example 1.

(2) Synthesis of cellulose

tris(4-iso-butylphenylcarbamate)

Cellulose tris(4-iso-butylphenylcarbamate) as a target was produced (yield: 87.3%) in the same manner as in the above item (2) of Example 1 except that: 4-iso-butylphenylisocyanate was used instead of 4-n-butylphenylisocyanate; and methanol was used instead of acetonitrile as a solvent for reprecipitation. The analyses of the carbon, hydrogen, and nitrogen elements of cellulose tris(4-iso-butylphenylcarbamate) thus produced are shown below.

CHN results:

| | | | |
|---|---|---|---|
| Measured value | C%: 67.78 | H%: 7.09 | N%: 6.00 |
| Theoretical value | C%: 68.10 | H%: 7.18 | N%: 6.11 |

(3) Production of cellulose

tris(4-iso-butylphenylcarbamate)-carrying packing material

A cellulose tris(4-iso-butylphenylcarbamate)-carrying packing material was produced in the same manner as in the above item (3) of Example 1 except that cellulose tris(4-iso-butylphenylcarbamate) was used instead of cellulose tris(4-n-butylphenylcarbamate).

(4) Method of producing packed column by means of cellulose tris(4-iso-butylphenylcarbamate)-carrying packing material

The packing of a column was performed in the same manner as in the above item (4) of Example 1 except that the cellulose tris(4-iso-butylphenylcarbamate)-carrying packing material was used instead of the cellulose tris(4-n-butylphenylcarbamate)-carrying packing material, to thereby produce a packed column packed with the cellulose tris (4-iso-butylphenylcarbamate)-carrying packing material.

<Example 3> Method of producing cellulose

tris(4-sec-butylphenylcarbamate)-carrying packing material and method of producing packed column

(1) Surface treatment of silica gel

A silica gel surface treatment was performed in the same manner as in the above item (1) of Example 1.

(2) Synthesis of cellulose

tris(4-sec-butylphenylcarbamate)

Cellulose tris(4-sec-butylphenylcarbamate) as a target was produced (yield: 85.8%) in the same manner as in the above item (2) of Example 1 except that 4-sec-butylphenylisocyanate was used instead of 4-n-butylphenylisocyanate. The analyses of the carbon, hydrogen, and nitrogen elements of cellulose tris(4-sec-butylphenylcarbamate) thus produced are shown below.

CHN results:

| | | | |
|---|---|---|---|
| Measured value | C%: 67.86 | H%: 7.14 | N%: 6.03 |
| Theoretical value | C%: 68.10 | H%: 7.18 | N%: 6.11 |

(3) Production of cellulose

tris(4-sec-butylphenylcarbamate)-carrying packing material

A cellulose tris(4-sec-butylphenylcarbamate)-carrying packing material was produced in the same manner as in the above item (3) of Example 1 except that cellulose tris(4-sec-butylphenylcarbamate) was used instead of cellulose tris(4-n-butylphenylcarbamate).

(4) Method of producing packed column by means of cellulose tris(4-sec-butylphenylcarbamate)-carrying packing material

The packing of a column was performed in the same manner as in the above item (4) of Example 1 except that the cellulose tris(4-sec-butylphenylcarbamate)-carrying packing material was used instead of the cellulose tris(4-n-butylphenylcarbamate)-carrying packing material, to thereby produce a packed column packed with the cellulose tris (4-sec-butylphenylcarbamate)-carrying packing material.

<Applied Example 1>

The packed columns produced in Examples were used to evaluate two kinds of compounds, that is Compound 1 represented by the following structural formula (3) and Compound 2 represented by the following structural formula (4), for asymmetric identification ability (values of retention coefficient k' and separation factor $\alpha$) by means of liquid chromatography. This evaluation involved the use of a mixed solution of optical isomers of Compound 1 and a mixed solution of optical isomers of Compound 2 as a sample.

Compound 1 can be produced by reducing a ketone body by means of the method described in J. Am. Chem. Soc., 55, 1933, 3857. Compound 2 can be produced by subjecting an extract, which is obtained by refluxing a commercially available drug Lescol (registered trademark of NOVARTIS) manufactured by NOVARTIS in chloroform under heat, to

ethyl esterification by means of an ordinary method.

The relative configuration of a hydroxyl group of 1,3-diol in Compound 2 is a cis body, and the sample is a racemic mixture of a 3R, 5S body and a 3S, 5R body.

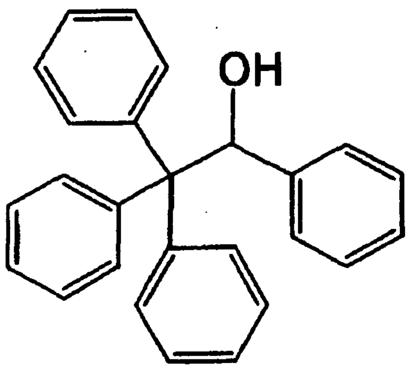

(3)

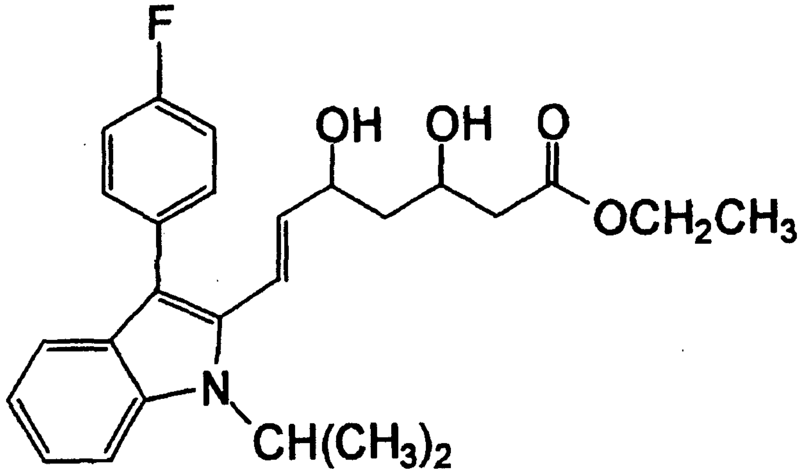

(4)

The evaluation was performed by using a solution of Compound 1 in hexane/2-propanol (hexane/2-propanol = 9/1) having a concentration of 1.0 mg/ml and a solution of Compound 2 in hexane/2-propanol (hexane/2-propanol = 1/3) having a concentration of 1.0 mg/ml as samples, and a mixed solvent of n-hexane and 2-propanol, which is a solution of 8 : 2 at a volume ratio, as a mobile phase at the flow rate of the mobile phase of 1.0 mL/min, a detection wavelength of 254 nm, and a temperature of 25°C.

A liquid chromatography apparatus manufactured by JASCO (pump: PU-980, UV detector; UV-975, autosampler: AS-950, column oven: 860-CO, system controller: LCSS-900) was used as an apparatus for the evaluation.

For comparison, a commercially available cellulose triphenylcarbamate-carrying column for separating optical isomers CHIRALCEL OC (registered trademark of DAICEL CHEMICAL INDUSTRIES, LTD., inner diameter 0.46 cm, length 25 cm) using a cellulose-based derivative, as an asymmetric identifier, having no substituent on an aromatic ring and a commercially available cellulose tris(4-methylphenylcarbamate)-carrying column for separating optical isomers CHIRALCEL OG (registered trademark of DAICEL CHEMICAL INDUSTRIES, LTD., inner diameter 0.46 cm, length 25 cm) using a cellulose-based derivative, as an asymmetric identifier, having a methyl group at a position 4 on an aromatic ring were evaluated similarly to the packed columns produced in Examples.

Table 1 shows the asymmetric identification ability of each of the packed columns produced in Examples and the asymmetric identification ability of each of the commercially available columns for comparison. Figs. 1 to 10 each show the chromatograph of measurement using each of the packed columns and the commercially available columns.

Each of the components to be separated by means of liquid chromatography using the packed columns produced in Examples can be confirmed to be an optical isomer by measuring the optical rotatory power of the component by means of an optical rotation detector (such as an OR-1 manufactured by SHOWA DENKO K. K.) or a CD detector (such as a CD-1595 manufactured by JASCO).

The retention coefficient (k') and the separation factor (α) shown in Table 1 below are defined by the following

expressions.

$$\text{Retention coefficient } k' = (t - t_0)/t_0$$

(In the expression, t represents the retention time of an antipode and to represents a dead time.)

$$\text{Separation factor } \alpha = k_2'/k_1'$$

(In the expression, $k_1$' represents the retention coefficient of an antipode to be retained more weakly and $k_2$' represents the retention coefficient of an antipode to be retained more strongly.)

"$k_1$'" in Table 1 represents the retention coefficient of a component to be detected more quickly (a component to be retained by a packing material more weakly) out of the antipodes.

The dead time in the above expression means the elution time of tri-tert-butylbenzene when tri-tert-butylbenzene is measured by means of the liquid chromatography under the above evaluation conditions.

A peak at 2.93 minutes in the chromatograph of Example 3 shown in each of Figs. 5 and 6 is probably due to the separating agent for optical isomers that has been slightly eluted.

Table 1

| Kind of separating agent | | Example 1 | Example 2 | Example 3 | CHIRALCEL 0C | CHORALCEL 0G |
|---|---|---|---|---|---|---|
| Position of substituent possessed by phenyl group in separating agent | | n-Bu | iso-Bu | sec-Bu | none | Me |
| Compound 1 | Retention coefficient ($k_1$') | 0.40 | 0.34 | 0.42 | 1.42 | 0.96 |
| | Separation factor ($\alpha$) | 1.80 | 1.78 | 1.54 | 1.00 | 1.31 |
| Compound 2 | Retention coefficient ($k_1$') | 5.07 | 4.25 | 0.82 | 3.95 | 3.98 |
| | Separation factor ($\alpha$) | 2.49 | 2.00 | 1.94 | 1.00 | 1.13 |

The foregoing reveals that the use of each of the packed columns produced in Examples enables optical isomers that have been hardly separated by means of a commercially available column to be separated.

In addition, comparison among the packing materials used in Examples shows that the packing material of Example 1 having an n-butyl group has excellent ability to separate optical isomers each having a structure having a linear carbon chain such as Compound 2.

Furthermore, the packing material of Example 3 having an sec-butyl group has excellent ability to separate optical isomers each having a structure in which a hydrocarbon group branches from a carbon atom bound to a benzene ring such as Compound 1.

The packing material of Example 2 having an iso-butyl group shows excellent ability to separate Compound 1 and Compound 2, but does not have any advantage over each compound comparable to the advantage of the packing material in each of Examples 1 and 3.

In other words, it is suggested that the use of a packing material having an alkyl group having a structure more similar to that of an optical isomer to be separated allows separation to be performed with higher accuracy than that in the conventional case.

INDUSTRIAL APPLICABILITY

According to the present invention, there is provided a novel separating agent for optical isomers having high ability to asymmetrically identify a target compound to be analyzed and isolated. The separating agent allows optical isomers that have been hardly separated conventionally to be separated and allows an apparatus that cannot be used

for separating predetermined optical isomers to be used for separating such optical isomers. Therefore, an additional improvement of productivity in the liquid chromatography isolation of an optically active substance on an industrial scale using a chiral stationary phase for HPLC and a simulated moving bed method in combination can be expected.

## Claims

1. A separating agent for optical isomers, comprising, as an active ingredient, a polysaccharide derivative prepared by substituting at least part of hydrogen atoms of hydroxyl and amino groups of a polysaccharide by at least one kind of atomic group represented by each of the following general formulae (1) and (2).

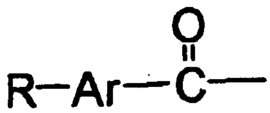

(1)

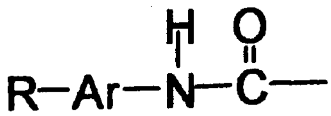

(2)

(In the formulae, Ar represents an aromatic hydrocarbon group, and R represents an alkyl group having 4 carbon atoms except a tert-butyl group.)

2. The separating agent for optical isomers according to claim 1, wherein the polysaccharide is cellulose or amylose.

3. The separating agent for optical isomers according to claim 1, wherein:

   the aromatic hydrocarbon group is a phenylene group; and
   the alkyl group is bonded to a carbon atom at a position 4, of the phenylene group, against a carbon atom bonded to a carbonyl group shown in the general formula (1) or to a nitrogen atom shown in the general formula (2).

4. The separating agent for optical isomers according to claim 1, wherein the separating agent is carried on a carrier.

5. The separating agent for optical isomers according to claim 1, wherein the separating agent is a packing material to be used for a stationary phase of chromatography.

6. The separating agent for optical isomers according to claim 1, wherein the separating agent is a packing material to be used for a stationary phase of continuous liquid chromatography capable of continuously isolating a target substance to be separated.

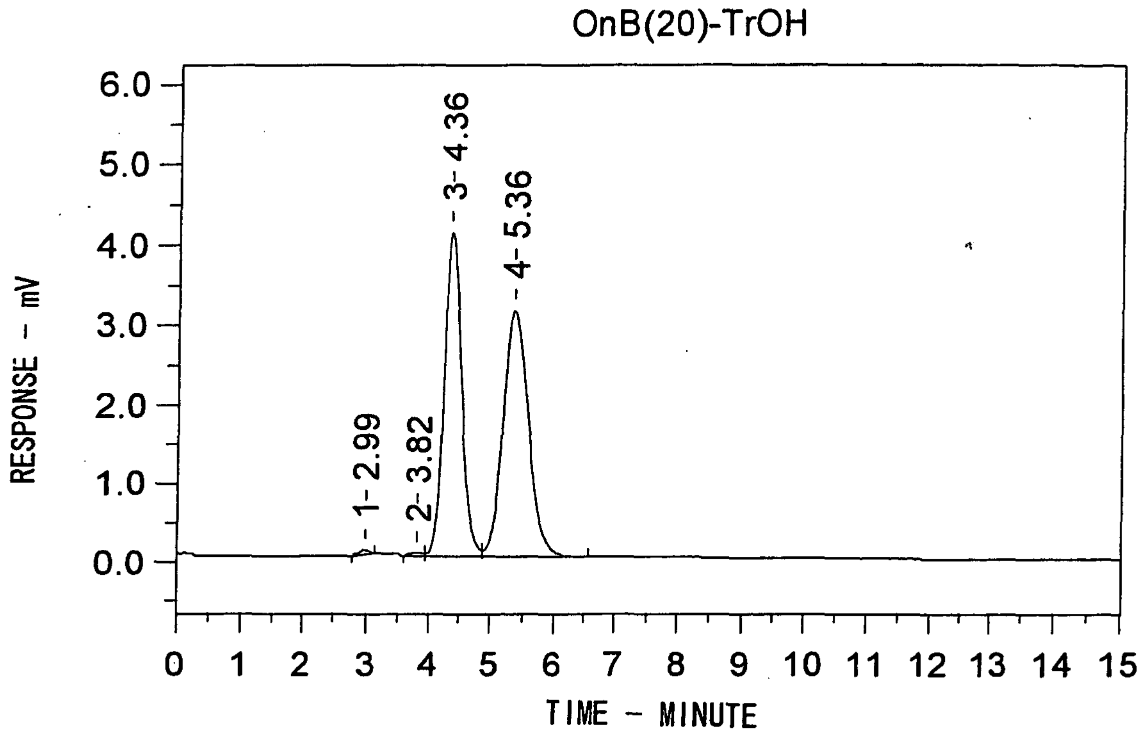
OnB(20)-TrOH
RESPONSE - mV
TIME - MINUTE
1- 2.99
2- 3.82
3- 4.36
4- 5.36

F i g. 1

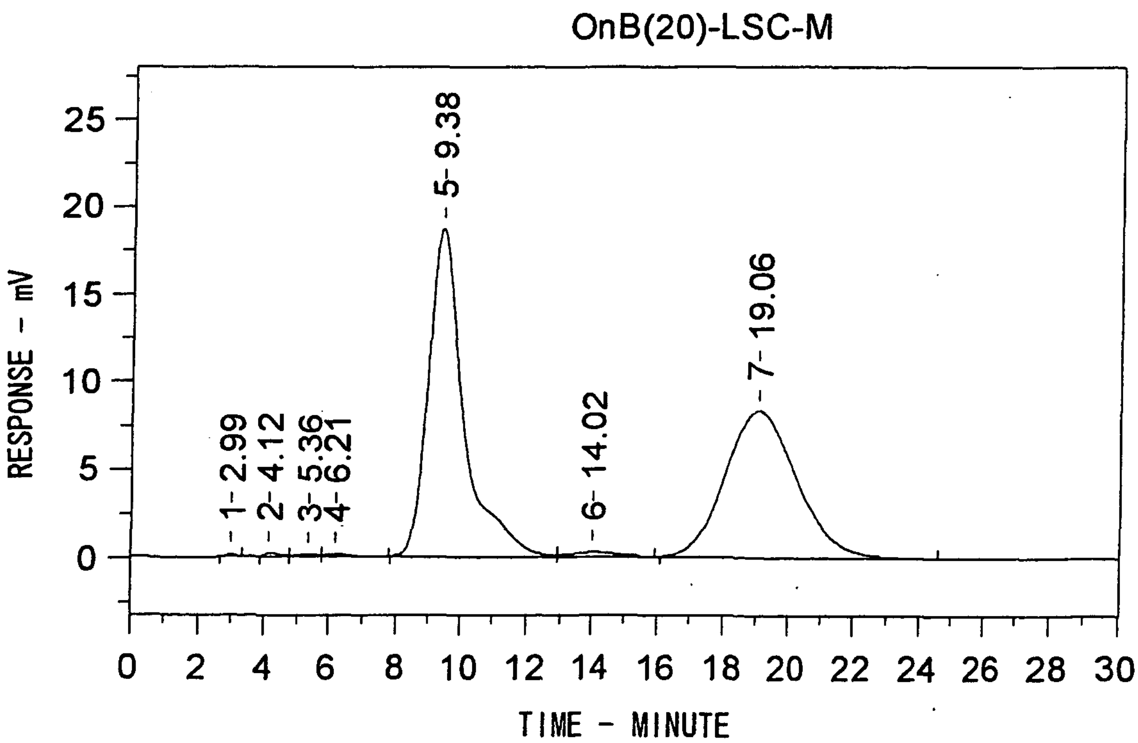
OnB(20)-LSC-M
RESPONSE - mV
TIME - MINUTE
1- 2.99
2- 4.12
3- 5.36
4- 6.21
5- 9.38
6- 14.02
7- 19.06

F i g. 2

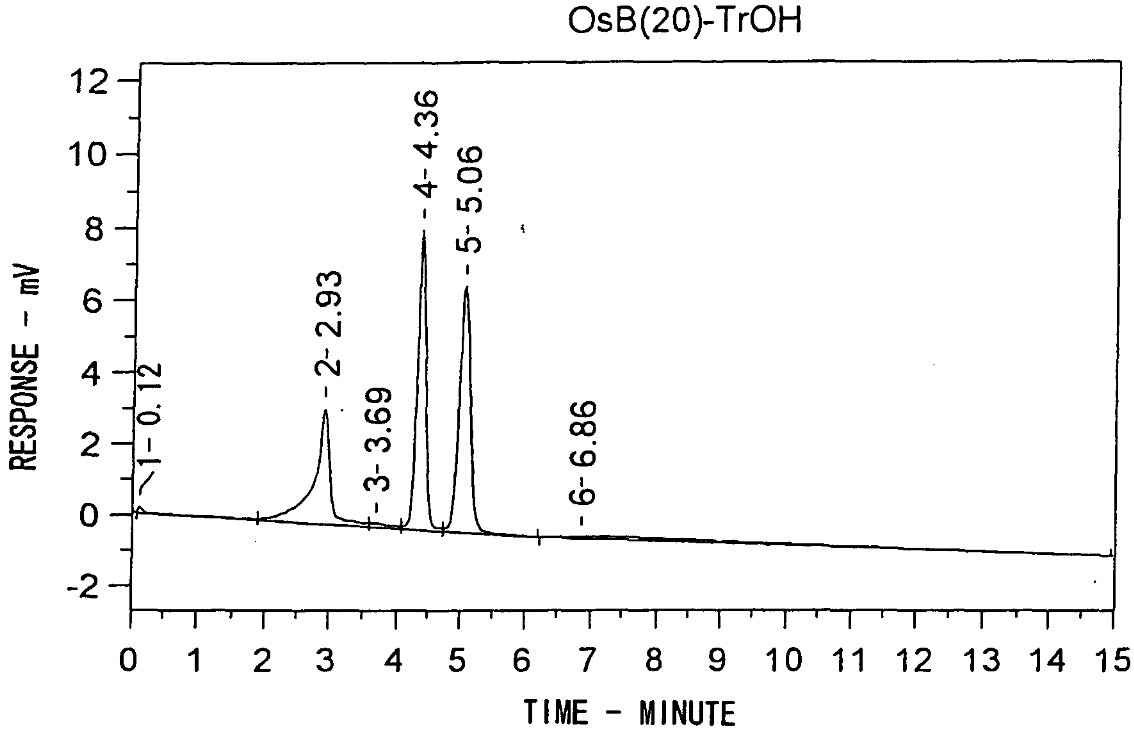
OsB(20)-TrOH
RESPONSE - mV
TIME - MINUTE
1- 0.12
2- 2.93
3- 3.69
4- 4.36
5- 5.06
6- 6.86
12
10
8
6
4
2
0
-2
0 1 2 3 4 5 6 7 8 9 10 11 12 13 14 15

Fig. 3

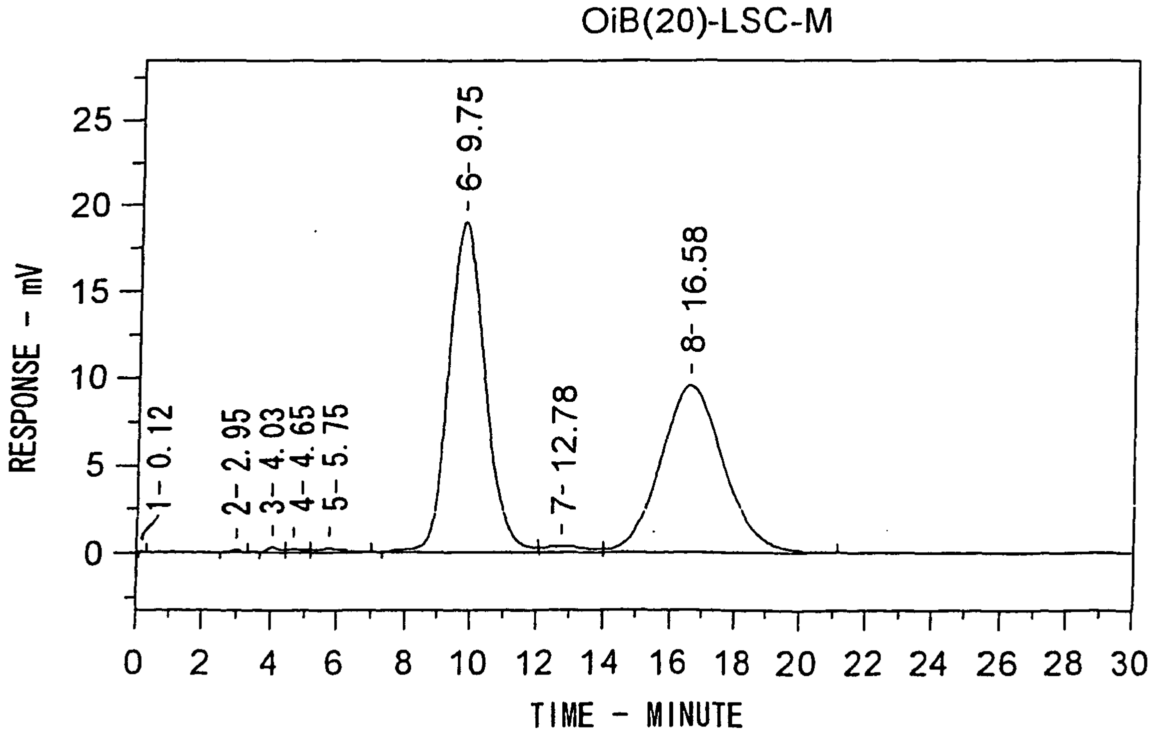
OiB(20)-LSC-M
RESPONSE - mV
TIME - MINUTE
1- 0.12
2- 2.95
3- 4.03
4- 4.65
5- 5.75
6- 9.75
7- 12.78
8- 16.58
25
20
15
10
5
0
0 2 4 6 8 10 12 14 16 18 20 22 24 26 28 30

Fig. 4

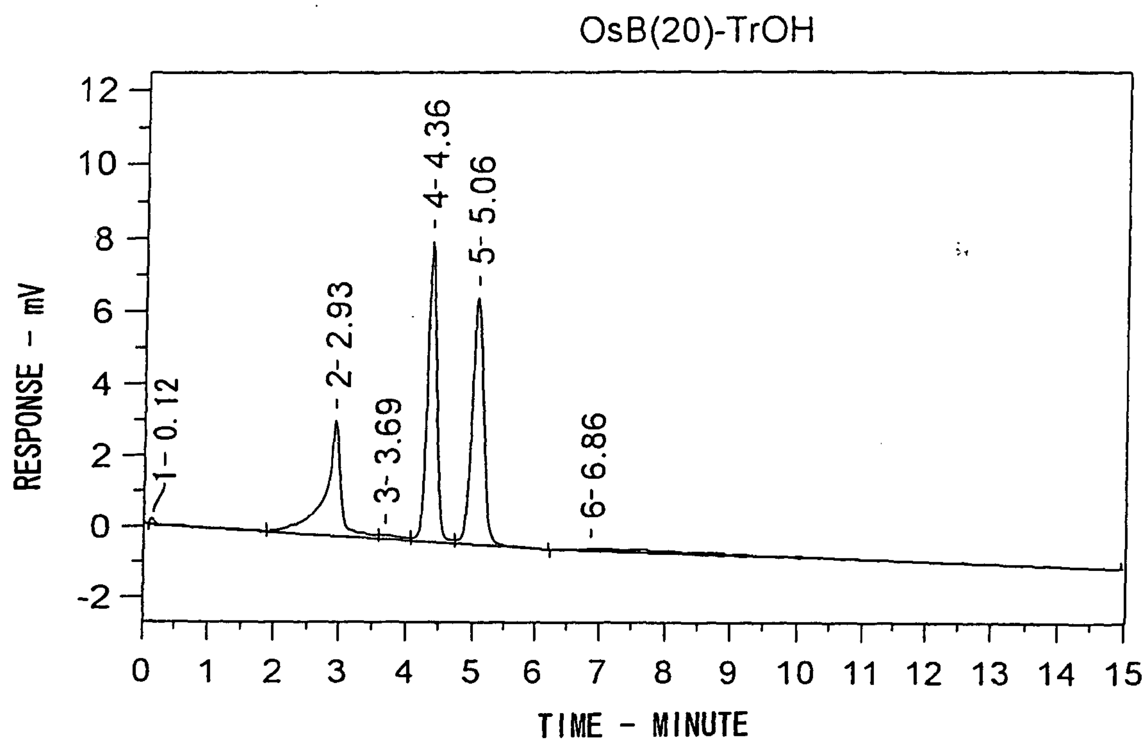
OsB(20)-TrOH
RESPONSE - mV
TIME - MINUTE
1- 0.12
2- 2.93
3- 3.69
4- 4.36
5- 5.06
6- 6.86
12
10
8
6
4
2
0
-2
0 1 2 3 4 5 6 7 8 9 10 11 12 13 14 15

Fig. 5

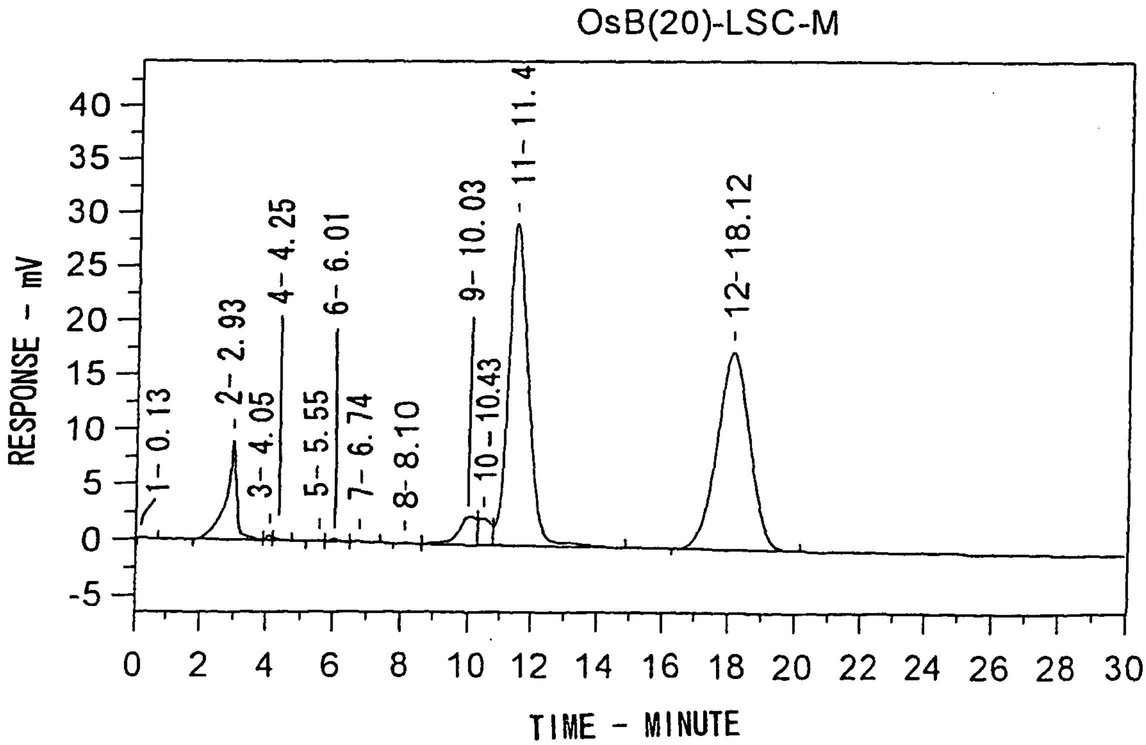
OsB(20)-LSC-M
RESPONSE - mV
TIME - MINUTE
1- 0.13
2- 2.93
3- 4.05
4- 4.25
5- 5.55
6- 6.01
7- 6.74
8- 8.10
9- 10.03
10- 10.43
11- 11.4
12- 18.12
40
35
30
25
20
15
10
5
0
-5
0 2 4 6 8 10 12 14 16 18 20 22 24 26 28 30

Fig. 6

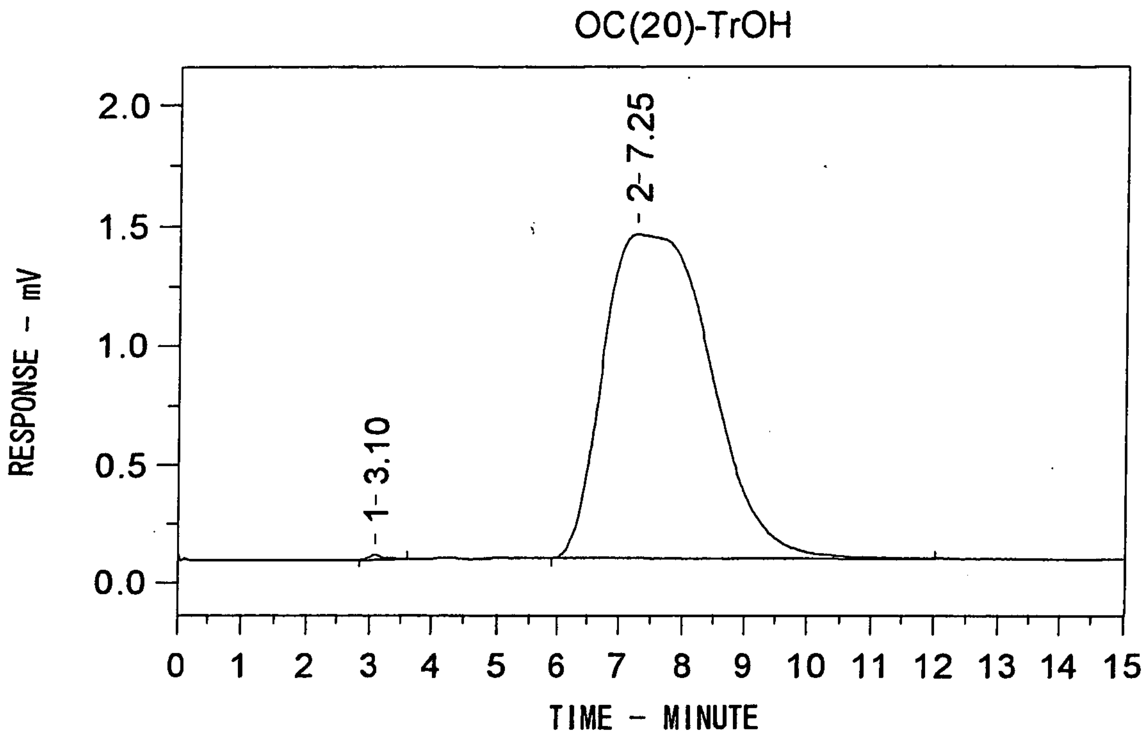
OC(20)-TrOH
2.0
1.5
1.0
0.5
0.0
RESPONSE - mV
1-3.10
2-7.25
0 1 2 3 4 5 6 7 8 9 10 11 12 13 14 15
TIME - MINUTE

Fig. 7

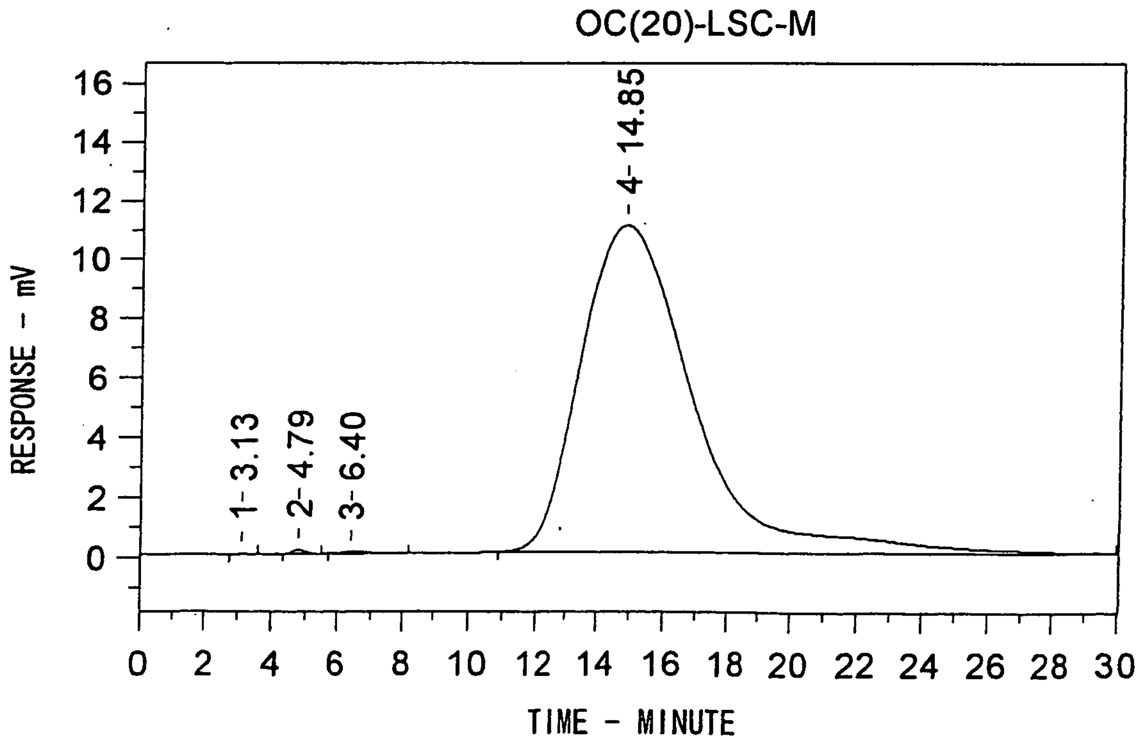
OC(20)-LSC-M
16
14
12
10
8
6
4
2
0
RESPONSE - mV
1-3.13
2-4.79
3-6.40
4-14.85
0 2 4 6 8 10 12 14 16 18 20 22 24 26 28 30
TIME - MINUTE

Fig. 8

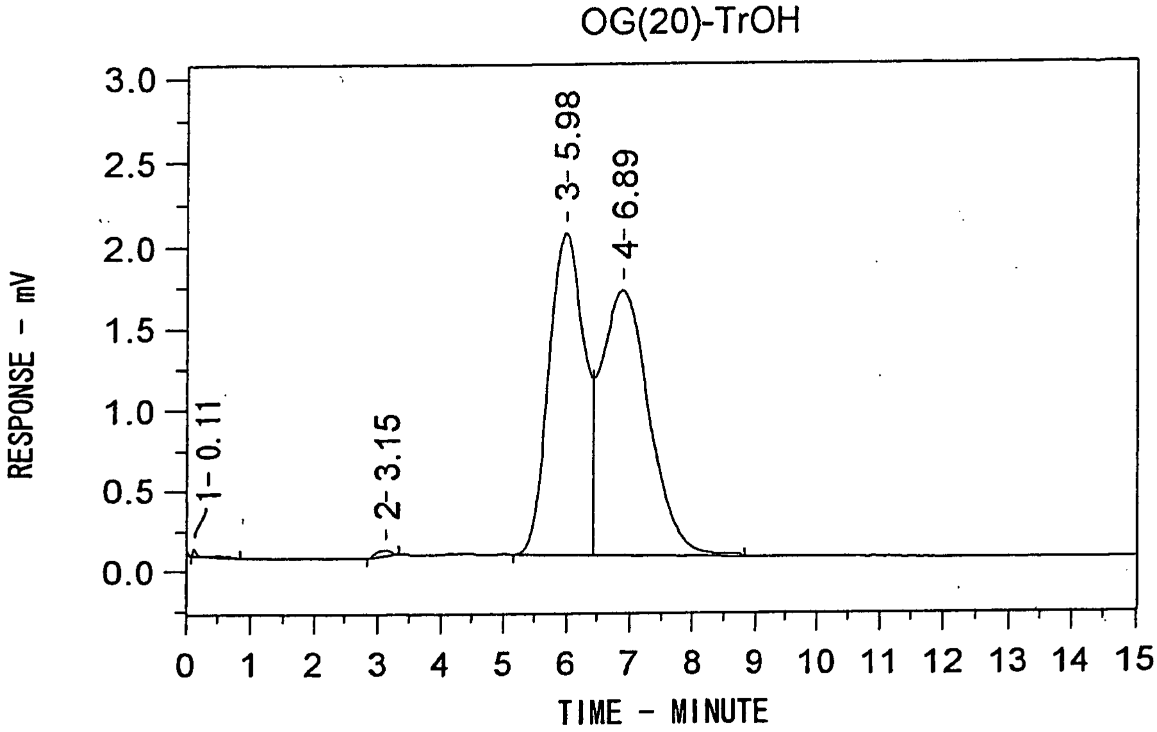
OG(20)-TrOH
RESPONSE - mV
TIME - MINUTE
1-0.11
2-3.15
3-5.98
4-6.89
3.0
2.5
2.0
1.5
1.0
0.5
0.0
0 1 2 3 4 5 6 7 8 9 10 11 12 13 14 15

Fig. 9

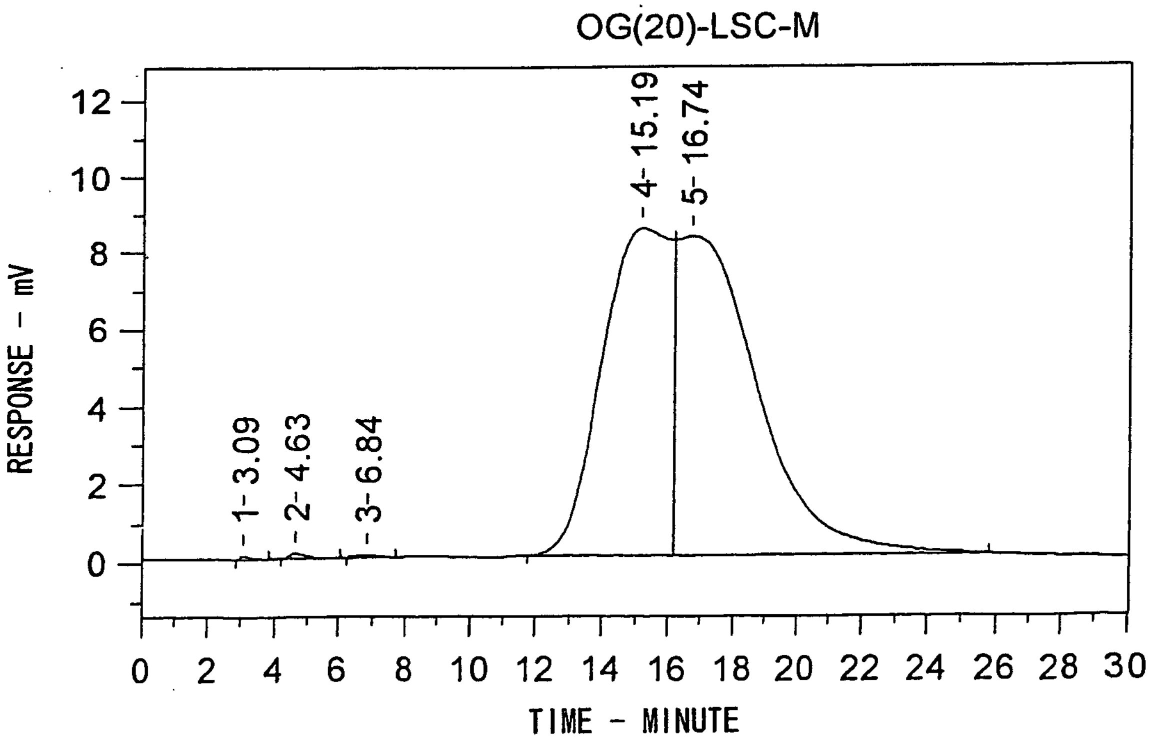
OG(20)-LSC-M
RESPONSE - mV
TIME - MINUTE
1-3.09
2-4.63
3-6.84
4-15.19
5-16.74
12
10
8
6
4
2
0
0 2 4 6 8 10 12 14 16 18 20 22 24 26 28 30

Fig. 10

## INTERNATIONAL SEARCH REPORT

International application No.
PCT/JP2004/005923

**A. CLASSIFICATION OF SUBJECT MATTER**
Int.Cl$^7$ G01N30/48, C08B15/00, C08B33/00

According to International Patent Classification (IPC) or to both national classification and IPC

**B. FIELDS SEARCHED**

Minimum documentation searched (classification system followed by classification symbols)
Int.Cl$^7$ G01N30/48, C08B15/00, C08B33/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2001-124752 A (Daicel Chemical Industries, Ltd.),<br>11 May, 2001 (11.05.01),<br>(Family: none) | 1-3,5,6<br>4 |
| A | JP 10-158200 A (Daicel Chemical Industries, Ltd.),<br>16 June, 1998 (16.06.98),<br>(Family: none) | 1-6 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>06 September, 2004 (06.09.04) | Date of mailing of the international search report<br>21 September, 2004 (21.09.04) |
| Name and mailing address of the ISA/<br>Japanese Patent Office<br>Facsimile No. | Authorized officer<br><br>Telephone No. |

Form PCT/ISA/210 (second sheet) (January 2004)